(19) **Europäisches Patentamt / European Patent Office / Office européen des brevets**

(11) **EP 2 876 066 A1**

(12) **EUROPEAN PATENT APPLICATION**
published in accordance with Art. 153(4) EPC

(43) Date of publication:
27.05.2015 Bulletin 2015/22

(21) Application number: 12881274.0

(22) Date of filing: 20.07.2012

(51) Int Cl.:
B65G 47/90 (2006.01)          B07C 5/34 (2006.01)
B25J 13/00 (2006.01)

(86) International application number:
PCT/JP2012/068457

(87) International publication number:
WO 2014/013609 (23.01.2014 Gazette 2014/04)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Kabushiki Kaisha Yaskawa Denki
Kitakyushu-shi, Fukuoka 806-0004 (JP)

(72) Inventors:
• KOYANAGI, Kenichi
Kitakyushu-shi
Fukuoka 806-0004 (JP)

• MATSUKUMA, Kenji
Kitakyushu-shi
Fukuoka 806-0004 (JP)
• KAWANO, Tomoki
Kitakyushu-shi
Fukuoka 806-0004 (JP)
• AOYAMA, Issei
Kitakyushu-shi
Fukuoka 806-0004 (JP)

(74) Representative: Grünecker Patent- und Rechtsanwälte
PartG mbB
Leopoldstraße 4
80802 München (DE)

(54) **ROBOT SYSTEM AND ARTICLE TRANSFER METHOD**

(57) A robot system and an article transfer method that can prevent a workload of each robot from becoming uneven are provided. A robot system according to an aspect of embodiments includes an information acquisition unit, a plurality of robots, and a distribution unit. The information acquisition unit acquires information indicating a two-dimensional position on a surface of a conveyance path of an article conveyed on the conveyance path. The plurality of robots transfers the article from the conveyance path. The distribution unit distributes the articles on the surface of the conveyance path to the plurality of robots as transfer targets on the basis of the information acquired by the information acquisition unit.

FIG.2

EP 2 876 066 A1

**Description**

Field

Embodiments disclosed herein relate to a robot system and an article transfer method.

Background

Conventionally, there is a technique in which an article conveyed on a conveyance path such as a conveyor is taken out from the conveyance path and transferred to another position by a plurality of robots.
For example, Patent Literature 1 discloses a technique in which articles on a conveyance path are distributed to each robot in advance as a transfer target on the basis of the order of the articles conveyed on the conveyance path and each robot transfers the distributed articles from the conveyance path.

Citation List

Patent Literature

Patent Literature 1: JP 3834088 B1

Summary

Technical Problem

However, the technique described in Patent Literature 1 has a problem that a workload of each robot becomes uneven. Specifically, when the articles on the conveyance path are distributed to each robot in advance as transfer targets on the basis of the order of the articles conveyed on the conveyance path, the distance from each robot to the transfer target article varies, so that an operation amount for the robot to transfer the article varies for each article and the workload of each robot becomes uneven.
An aspect of the embodiments is made in view of the above circumstances and an objective of the aspect is to provide a robot system and an article transfer method that can prevent the workload of each robot from becoming uneven.

Solution to Problem

A robot system according to an aspect of embodiments includes an information acquisition unit, a plurality of robots, and a distribution unit. The information acquisition unit acquires information indicating a two-dimensional position on a surface of a conveyance path of an article conveyed on the conveyance path. The plurality of robots transfers the article from the conveyance path. The distribution unit distributes the articles on the surface of the conveyance path to the plurality of robots as transfer targets on the basis of the information acquired by the information acquisition unit.
Advantageous Effects of Invention
According to an aspect of the embodiments, it is possible to provide a robot system and an article transfer method that can prevent the workload of each robot from becoming uneven.

Brief Description of Drawings

FIG. 1 is an explanatory diagram illustrating a part of a robot system according to a first embodiment.
FIG. 2 is a block diagram illustrating a configuration of the robot system according to the first embodiment.
FIG. 3 is an explanatory diagram illustrating an example of a method of distributing articles by a distribution unit according to the first embodiment.
FIG. 4 is an explanatory diagram illustrating an example of the method of distributing articles by the distribution unit according to the first embodiment.
FIG. 5 is a flowchart illustrating a process performed by the distribution unit according to the first embodiment.
FIG. 6 is a block diagram illustrating a configuration of a robot system according to a second embodiment.
FIG. 7 is an explanatory diagram illustrating a part of a robot system according to a third embodiment.
FIG. 8 is a block diagram illustrating a configuration of a robot system according to a fourth embodiment. Description of Embodiments

Hereinafter, embodiments of the robot system and the article transfer method disclosed by the present application will be described in detail with reference to the accompanying drawings. The present invention is not limited by the embodiments described below.

First Embodiment

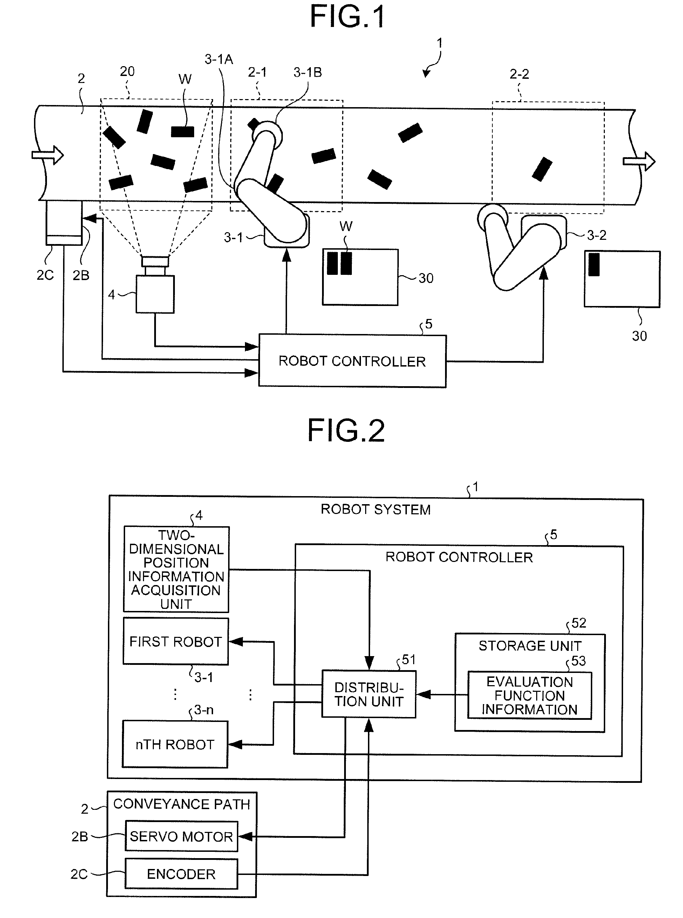

FIG. 1 is an explanatory diagram illustrating a part of a robot system 1 according to a first embodiment. As illustrated in FIG. 1, the robot system 1 is a system that transfers articles W sequentially conveyed on a conveyance path 2 to a predetermined placement table (hereinafter referred to as a "place 30") arranged beside the conveyance path 2.

Here, the conveyance path 2 according to the present embodiment is a conveyor device such as a belt conveyor and a roller conveyor. The conveyor device includes a servo motor 2B that operates the conveyor device and an encoder 2C that detects a rotational position (that is, a conveyance position of the conveyor device) of the servo motor 2B. The servo motor 2B and the encoder 2C are connected to a control device (a robot controller 5 in the present embodiment).

The servo motor 2B operates according to an instruction of the robot controller 5. Thereby, the conveyance path 2 sequentially conveys a plurality of articles W from an upstream side to a downstream side in a conveyance direction indicated by void arrows in FIG. 1. The encoder 2C outputs the rotational position of the servo motor 2B to the robot controller 5.

The conveyance path 2 may convey the articles W at a constant conveyance speed set in advance. The conveyance path 2 is not limited to a conveyor, but may be a shooter or the like which is formed so that a conveyance surface forms a downslope from the upstream side to the downstream side and conveys the articles W from the upstream side to the downstream side.

The robot system 1 includes a plurality of robots 3-1 and 3-2 that take out the article W from the conveyance path 2 and transfer the article W to the place 30. Although, in FIG. 1, two robots 3-1 and 3-2 are illustrated, the robot system 1 includes n robots (n is a natural number) (see FIG. 2).

In the description below, when a specific robot is indicated from among the n robots included in the robot system 1, the robots are referred to as a first robot 3-1, a second robot 3-2, ···, and nth robot 3-n in an order from the robot of which takeout position of the article W on the conveyance path 2 is the most upstream. When a specific robot is not indicated, each robot is referred to as simply a robot.

The robot system 1 further includes a two-dimensional position information acquisition unit 4 that acquires information indicating a two-dimensional position on the surface of the conveyance path 2 of the article W conveyed on the conveyance path 2 and the robot controller 5 that controls operations of the conveyance path 2 and the first robot 3-1 to the nth robot 3-n.

Here, the two-dimensional position information acquisition unit 4 is, for example, an image capturing device. The two-dimensional position information acquisition unit 4 captures an image of the article W conveyed to an image capturing area 20 defined on the immediately upstream side of a first takeout area 2-1 on the conveyance path 2 from which the first robot 3-1 takes out the article W, and outputs image information of the captured image to the robot controller 5.

The first robot 3-1 includes a single-arm serial link robot arm 3-1A and an end effector 3-1B provided at the tip of the robot arm 3-1A. Here, the end effector 3-1B includes, for example, a sucker which adsorbs and holds an article by applying negative pressure by a vacuum pump and releases the article by releasing the negative pressure. The end effector 3-1B is not limited to a device that adsorbs and holds an article as long as the end effector 3-1B has a mechanism that can hold and convey an article.

The first robot 3-1 takes out the article W from the first takeout area 2-1 of the conveyance path 2 according to control of the robot controller 5 and transfers the article W to a place 30 provided at a predetermined position.

The second robot 3-2 to the nth robot 3-n (see FIG. 2) have the same configuration as that of the first robot 3-1 and perform the same operation as that of the first robot 3-1. For example, the second robot 3-2 takes out the article W from a second takeout area 2-2 on the immediate downstream side of the first takeout area 2-1 on the conveyance path 2 and transfers the article W to a place 30 provided at a predetermined position.

Although FIG. 1 illustrates a case in which the first robot 3-1 and the second robot 3-2 are a serial link robot, the first robot 3-1 to the nth robot 3-n may be a parallel link robot.

The robot controller 5 is a control device that controls operations of the conveyance path 2 and the first robot 3-1 to the nth robot 3-n (see FIG. 2). The robot controller 5 detects a two-dimensional position of the article W in the image capturing area 20 from the image information inputted from the two-dimensional position information acquisition unit 4.

Then, the robot controller 5 distributes the articles W on the surface of the conveyance path 2 to each robot as transfer targets so that the transfer load of the articles W of each robot becomes even on the basis of the detected two-dimensional positions of the articles W in the image capturing area 20 and the rotational position of the servo motor B inputted from the encoder 2C of the conveyance path 2.

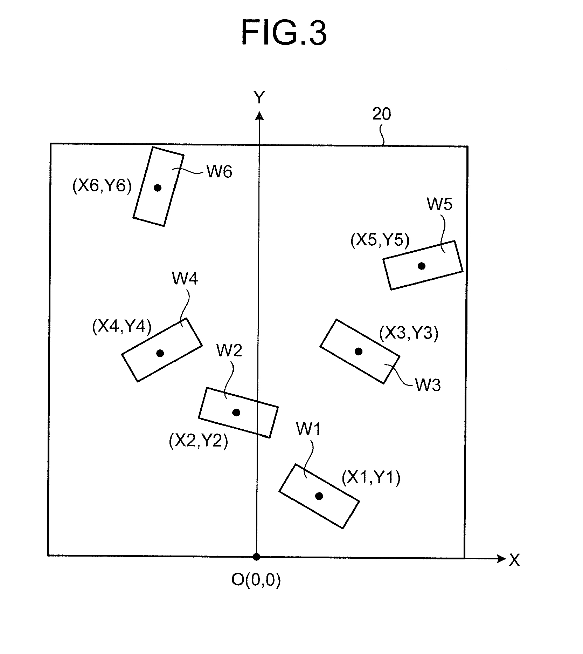

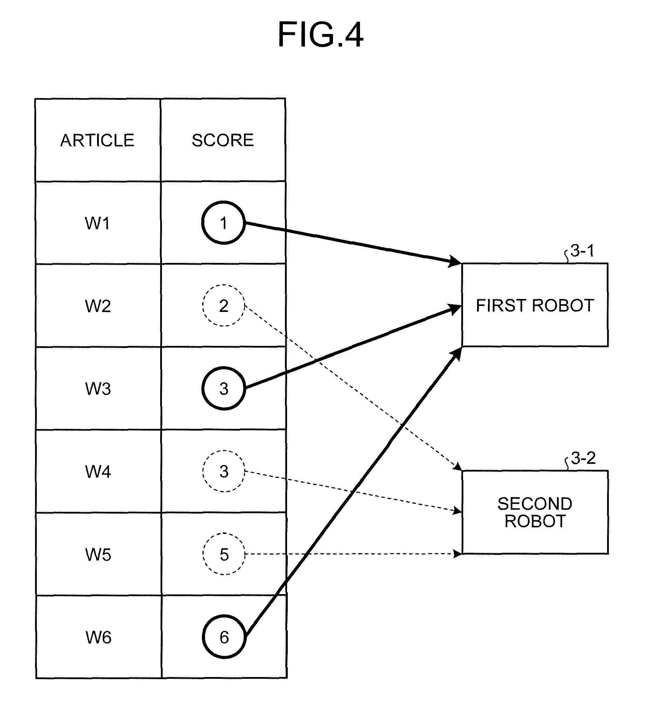

Thereby, in the robot system 1, it is possible to prevent the workload of each robot from becoming uneven. A specific example of the method for the robot controller 5 to distribute the articles W will be described later with reference to FIGs. 3 and 4.

Next, a configuration of the robot system 1 will be described with reference to FIG. 2. FIG. 2 is a block diagram illustrating the configuration of the robot system 1 according to the first embodiment. As illustrated in FIG. 2, the robot system 1 includes n robots, which are the first robot 3-1 to the nth robot 3-n, the two-dimensional position information acquisition unit 4, and the robot controller 5. The two-dimensional position information acquisition unit 4 and the conveyance path 2 have already been described, so that the description of these will be omitted here.

The robot controller 5 includes a distribution unit 51 and a storage unit 52. Although omitted here in FIG. 2, the robot controller 5 includes an instruction unit that instructs the first robot 3-1 to the nth robot 3-n to perform various operations in addition to the distribution unit 51 and the storage unit 52.

The storage unit 52 stores predetermined evaluation function information 53. The evaluation function information 53 is a function which calculates the workload of the robot as a score when the robot transfers the article W by substituting the two-dimensional position of the article W in the image capturing area 20 in the function. In the present embodiment, the following Formula (1) is used as the evaluation function information 53.

$$R = A|X| + BY \quad \cdots \text{ Formula (1)}$$

Here, R in Formula (1) is a score indicating the workload of the robot, and X and Y are variables where the X coordinate and the Y coordinate of the article W in an XY orthogonal coordinate system defined in the image capturing area 20 (see FIG. 1) are substituted respectively. An example of the XY orthogonal coordinate system defined in the image capturing area 20 will be described later with reference to FIG. 3.

A and B are predetermined coefficients. Specifically, A is a coefficient for converting a moving distance of the end effector 3-1B moved by the robot in a direction in parallel with the X axis in the XY orthogonal coordinate system into the workload of the robot.

B is a coefficient for converting a moving distance of the end effector 3-1B moved by the robot in a direction in parallel with the Y axis in the XY orthogonal coordinate system into the workload of the robot. In Formula (1), the larger the distance from the robot to the position of the article W on the conveyance path 2 when the article W is transferred by the robot is, the higher the calculated score becomes.

The distribution unit 51 is a processing unit that distributes the articles W to each robot to cause the robot to transfer the articles W. The distribution unit 51 detects the two-dimensional position of the article W in the image capturing area 200 (see FIG. 1) on the basis of the image information inputted from the two-dimensional position information acquisition unit 4 and the rotational position of the servo motor B inputted from the encoder 2C of the conveyance path 2.

Subsequently, the distribution unit 51 reads the evaluation function information 53 from the storage unit 52 and substitutes the detected two-dimensional position of each article W in the aforementioned Formula (1), which is the evaluation function information 53, to calculate the score indicating the workload of the robot when the robot transfers the article W for each article W.

Then, the distribution unit 51 determines a robot to be a distribution destination of each article W on the conveyance path 2 so that the sum of the scores of the articles W distributed to the robot as transfer targets is even for each robot.

Thereafter, the distribution unit 51 sequentially calculates the position of each article W on the conveyance path 2 (hereinafter referred to as an "article position") on the basis of the two-dimensional position of each article W in the image capturing area 20 and the rotational position of the servo motor B inputted from the encoder 2C of the conveyance path 2.

When each article W is conveyed to the takeout area of the robot determined to be a distribution destination, the distribution unit 51 distributes the article W to the robot as a transfer target by providing the article position of the article W conveyed to the takeout area to the robot that is the distribution destination.

For example, when an article W of which the distribution destination is determined to be the first robot 3-1 is transferred to the first takeout area 2-1 (see FIG. 1), the distribution unit 51 distributes the article W to the first robot 3-1 as a transfer target by providing the article position of the article W to the first robot 3-1.

Next, a specific example of the method for the distribution unit 51 to distribute the articles W will be described with reference to FIGs. 3 and 4. FIGs. 3 and 4 are explanatory diagrams illustrating an example of the method for the distribution unit 51 to distribute the articles W according to the first embodiment.

Here, a case will be described in which, when six articles W1 to W6 are conveyed to the image capturing area 20, the distribution unit 51 distributes the articles W1 to W6 to the first robot 3-1 and the second robot 3-2 as transfer targets.

As illustrated in FIG. 3, when image information of a captured image of the six articles W1 to W6 conveyed to the image capturing area 20 is inputted from the two-dimensional position information acquisition unit 4, the distribution unit 51 first defines the origin O (0, 0) at a predetermined position in the image capturing area 20 of the captured image.

Specifically, when the captured image is assumed to be captured in the first takeout area 2-1, the position closest to the first robot 3-1 in the image capturing area 20 is defined as the origin O, and when the captured image is assumed to be captured in the second takeout area 2-2, the position closest to the second robot 3-2 in the image capturing area 20 is defined as the origin O.

Further, the distribution unit 51 defines the XY orthogonal coordinate system by defining a direction which passes through the origin O (0, 0) and which is in parallel with the conveyance direction of the articles W1 to W6 conveyed by the conveyance path 2 as the X axis and defining a direction which passes through the origin O (0, 0) and which crosses the image capturing area 20 in a direction perpendicular to the X axis as the Y axis.

Subsequently, the distribution unit 51 calculates the X coordinate and the Y coordinate of the articles W1 to W6 in the XY orthogonal coordinate system, respectively. Then, the distribution unit 51 calculates the score of each of the articles W1 to W6 by substituting the calculated X coordinate and Y coordinate of the articles W1 to W6 in the aforementioned Formula (1).

As a result, for example, as illustrated in FIG. 4, it is assumed that the score of the article W1 is "1", the score of the article W2 is "2", the scores of the articles W3 and W4 are "3", the score of the article W5 is "5", and the score of the article W6 is "6".

In this case, the distribution unit 51 determines the first robot 3-1 as the distribution destination of the article W1, the article W3, and the article W6 as indicated by the solid line arrows in FIG. 4, and determines the second robot 3-2 as the distribution destination of the article W2, the article W4, and the article W5 as indicated by the dashed line arrows in FIG. 4.

Thereby, the total score of the scores of the article W1, the article W3, and the article W6 which are distributed to the first robot 3-1 as the transfer targets is "10", which is the same as the total score of the scores of the article W2, the article W4, and the article W5 which are distributed to the second robot 3-2 as the transfer targets.

In this way, in the robot system 1, the distribution destinations of the articles W are determined so that the total score of the articles W distributed to each robot is even for each robot, that is, the workload of each robot when the robot transfers the articles W is even. Therefore, according to the robot system 1, it is possible to prevent the workload of each robot from becoming uneven.

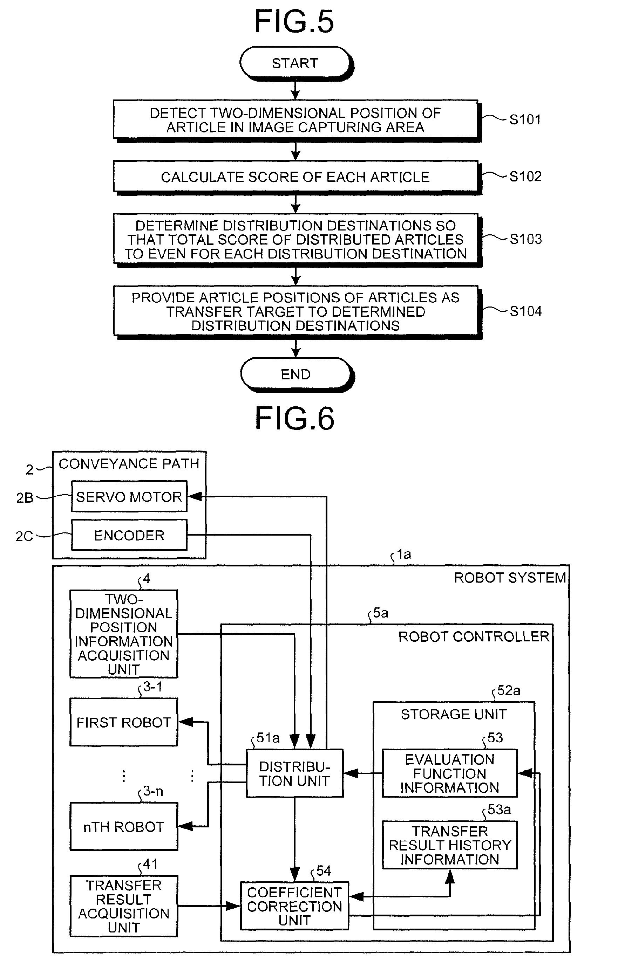

Next, a process performed by the distribution unit 51 will be described with reference to FIG. 5. FIG. 5 is a flowchart illustrating the process performed by the distribution unit 51 according to the first embodiment. The distribution unit 51 performs the process illustrated in FIG. 5 every time the image information is inputted from the two-dimensional position information acquisition unit 4.

Specifically, as illustrated in FIG. 5, the distribution unit 51 analyzes the image of the inputted image information and detects the two-dimensional position of each article W in the image capturing area 20 (step S101). Subsequently, the distribution unit 51 calculates the score of each article W by substituting the detected two-dimensional position of each article W in Formula (1) of the evaluation function information 53 (see FIG. 2) (step S102).

Then, the distribution unit 51 determines robots to be distribution destinations so that the total score of the articles W distributed to one robot as transfer targets is even for each robot (step S103). Thereafter, the distribution unit 51 provides the article positions on the conveyance path 2 of the articles W, which are transfer targets, to the determined distribution destination robots (step S104) and ends the process.

As described above, in the robot system according to the first embodiment, the articles on the conveyance path surface are distributed to a plurality of robots as transfer targets on the basis of the information indicating the two-dimensional positions of the articles on the conveyance path surface. Thereby, the robot system according to the first embodiment can prevent the workload of each robot from becoming uneven.

In the present embodiment, the score of each article W is calculated by substituting the two-dimensional position of the article W in the image capturing area 20 into Formula (1). However, the formula used to calculate the score is not limited to Formula (1).

For example, the score of each article W may be calculated by using the following Formula (2):

$$R = A|X| + BY + C\alpha \quad \cdots \text{Formula (2)}$$

Here, Formula (2) is a formula in which a term $C\alpha$ for converting a factor to be a workload of a robot when the robot transfers the article W other than the two-dimensional position of the article W in the image capturing area 20 into a score is added to the right side of Formula (1).

The distribution unit 51 calculates the score of each article W by using Formula (2), so that the distribution unit 51 can distribute the articles W on the conveyance path 2 to each robot so that the workload of each robot is more accurately even.

Specifically, when an article W is transferred from the conveyance path 2 by the robot, the workload of the robot when the robot transfers the article W varies due to a difference of type of the article W on the conveyance path 2. For example, regarding a relatively heavy article W and a relatively light article W, the workload for transferring the former is greater than that for transferring the latter.

Further, regarding an article W that can be transferred relatively roughly and an article W that needs to be transferred relatively carefully, the time required to transfer the latter is longer than that required to transfer the former, so that the workload for transferring the latter is greater than that for transferring the former. The workload of the robot when the robot transfers the article W varies due to, for example, a difference between face up and face down of the conveyed article W and an orientation (angle) of the conveyed article W in addition to the type of the article W.

When there is a factor to be a workload of the robot when the robot transfers the article W other than the two-dimensional position of the article W in the image capturing area 20, the distribution unit 51 calculates the score of each article W by using the aforementioned Formula (2).

In this case, the distribution unit 51 identifies the type, orientation, face-up/face-down, and the like of the article W in the captured image by analyzing the image of the image information inputted from the two-dimensional position information acquisition unit 4, calculates a value indicating the workload of the robot according to the identification result, and substitutes the value into $C\alpha$ in Formula (2). Further, the distribution unit 51 substitutes the two-dimensional position of the article W, of which type, orientation, face-up/face-down, and the like are identified, in the image capturing area 20 into the aforementioned Formula (2) and calculates the score of each article W.

Thereby, the distribution unit 51 can distribute the articles W on the conveyance path 2 to each robot so that the workload of each robot is more accurately even on the basis of the score of each article W calculated by using Formula (2).

Second Embodiment

Next, a robot system 1a according to a second embodiment will be described with reference to FIG. 6. FIG. 6 is a block diagram illustrating a configuration of the robot system 1a according to the second embodiment. Here, among components of the robot system 1a, the same components as those of the robot system 1 illustrated in FIG. 2 are denoted by the same reference numerals as those in FIG. 2 and the description thereof will be omitted.

As illustrated in FIG. 6, the robot system 1a is different from the robot system 1 illustrated in FIG. 2 in that the robot system 1a includes a transfer result acquisition unit 41 in addition to the components illustrated in FIG. 2, a robot controller 5a includes a coefficient correction unit 54, and a storage unit 52a stores transfer result history information 53a.

The transfer result acquisition unit 41 is a processing unit that counts the number of articles W that are not transferred from the conveyance path 2 by any of the first robot 3-1 to the nth robot 3-n, for example, the number of articles W which the robots failed to transfer, and outputs the counted number of articles W to the coefficient correction unit 54 as a transfer result.

For example, the transfer result acquisition unit 41 counts the number of articles W that were not transferred by any of the robots by counting the number of articles W that pass through the takeout area on the conveyance path 2 from which the nth robot 3-n takes out the article W without being transferred by the nth robot 3-n.

The counting method of the number of articles W performed by the transfer result acquisition unit 41 is not limited to this. For example, the transfer result acquisition unit 41 may be configured to count the number of articles W that were not transferred by any of the robots by subtracting the sum of the numbers of articles W that are transferred to each place 30 from the total number of articles W that are conveyed by the conveyance path 2.

The coefficient correction unit 54 is a processing unit that corrects the coefficients A and B in Formula (1) used to calculate the score of each article W by a distribution unit 51a. In the coefficient correction unit 54, the coefficients A and B in Formula (1) are inputted from the distribution unit 51a every predetermined time (for example, every hour) and a transfer result is inputted from the transfer result acquisition unit 41.

Then, the coefficient correction unit 54 associates the transfer result inputted from the transfer result acquisition unit 41 with the coefficients A and B inputted from the distribution unit 51a and stores the transfer result and the coefficients A and B in the storage unit 52a as the transfer result history information 53a.

Further, when the transfer result is inputted from the transfer result acquisition unit 41 and the coefficients A and B are inputted from the distribution unit 51a, the coefficient correction unit 54 compares the transfer result and the coefficients A and B which are inputted at this time with the transfer result history information 53a.

Then, the coefficient correction unit 54 corrects the coefficients A and B in Formula (1) of the evaluation function information 53 so that the transfer result to be inputted next time is improved, that is, the number of articles W that were not transferred by any of the robots decreases, on the basis of the comparison result.

As described above, in the robot system according to the second embodiment, the coefficient correction unit corrects the coefficients in the evaluation function by feedback control so that the next transfer result is improved on the basis of a history of the transfer result at this time and the transfer result in the past.

Therefore, according to the robot system of the second embodiment, it is possible to prevent the workload of each robot from becoming uneven as well as to reduce the number of articles that are not transferred from the conveyance path by the robots.

Third Embodiment

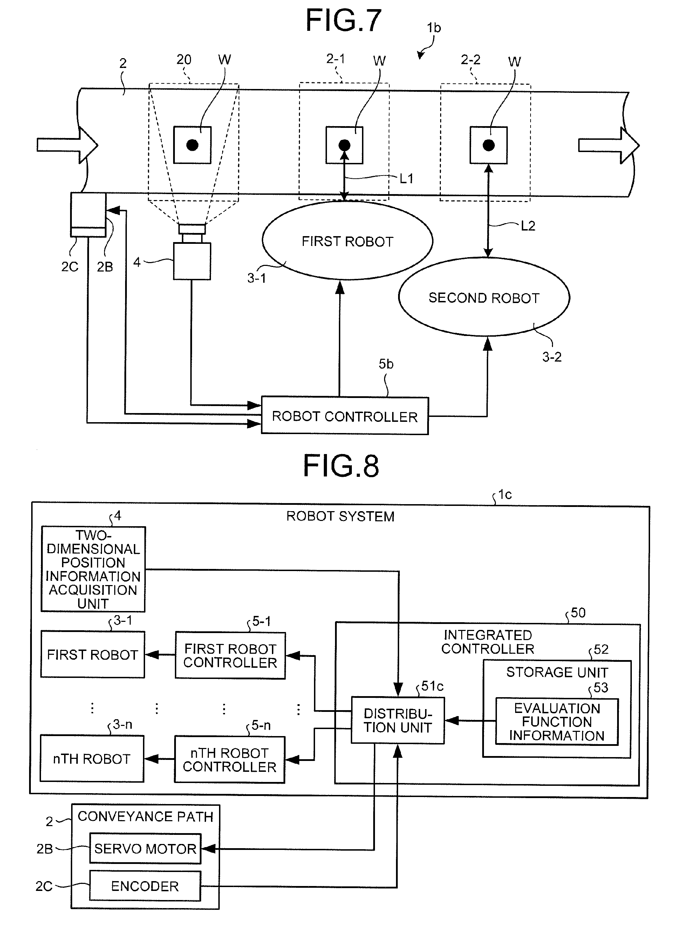

Next, a robot system 1b according to a third embodiment will be described with reference to FIG. 7. FIG. 7 is an explanatory diagram illustrating a part of the robot system 1b according to the third embodiment. Here, among components of the robot system 1b, the same components as those of the robot system 1 illustrated in FIG. 1 are denoted by the same reference numerals as those in FIG. 1 and the description thereof will be omitted. In FIG. 7, the first robot 3-1 and the second robot 3-2 are indicated by an ellipse.

As illustrated in FIG. 7, the robot system 1b is different from the robot system 1 illustrated in FIG. 1 in that the distances from each robot to the conveyance path 2 are different from each other and the calculation method of the score of each article W by the distribution unit (not illustrated in FIG. 7) of a robot controller 5b is different from that of the robot system 1.

The distribution unit of the robot controller 5b according to the present embodiment distributes the articles W on the surface of the conveyance path 2 to a plurality of robots as transfer targets on the basis of the relative position between each robot and the conveyance path 2. More specifically, the distribution unit distributes the articles W to any of a plurality of robots as transfer targets on the basis of the relative position between a robot and the two-dimensional position of the article W on the conveyance path 2 when the article W is conveyed to a position from which the article W is transferred by the robot.

For example, it is assumed that the distance from the article W of which image is captured by the two-dimensional position information acquisition unit 4 and which is conveyed to the first takeout area 2-1 to the first robot 3-1 is L1, and the distance from the article W of which image is captured by the two-dimensional position information acquisition unit 4 and which is conveyed to the second takeout area 2-2 to the second robot 3-2 is L2. Here, it is assumed that the distances from each place 30 (see FIG. 1) that is the transfer destination of the article W to the conveyance path 2 are the same.

In this case, the workloads from when the first robot 3-1 and the second robot 3-2 hold the article W on the conveyance path 2 to when the first robot 3-1 and the second robot 3-2 transfer the article W to the places 30 are the same. However, the workloads to when the first robot 3-1 and the second robot 3-2 hold the article W on the conveyance path 2 are not the same.

Therefore, when the distribution unit calculates the score of each article W, the distribution unit calculates the score of one article W for each robot by using a different formula of evaluation function according to the difference of the distance from each robot to the conveyance path 2.

Then, the distribution unit determines robots to be distribution destinations so that the total score of the articles W distributed to one robot as transfer targets is even for each robot, and provides article positions on the conveyance path 2 of the articles W, which are transfer targets, to the determined distribution destination robots.

For example, when calculating the score of the article W of which image is captured in the image capturing area 20 illustrated in FIG. 7, the distribution unit calculates the score when the first robot 3-1 transfers the article W by using the aforementioned Formula (1): $R = A|X| + BY$.

On the other hand, the distribution unit calculates the score when the second robot 3-2 transfers the article W by using the following Formula (3):

$$R = A|X| + B(Y + (L2 - L1)) \quad \cdots \text{Formula (3)}$$

The distribution unit also calculates the score when another robot transfers the article W by using a formula of a different evaluation function according to the difference of the distance from the robot to the conveyance path 2. Thereby, the distribution unit of the robot system 1b can calculate the score accurately reflecting the workload when each robot transfers the article W.

Then, the distribution unit calculates the score for each robot for each of a plurality of articles W conveyed to the image capturing area 20 and distributes the articles W, which are transfer targets, to each robot so that the total score of the articles W distributed to one robot as transfer targets is even for each robot.

As described above, the distribution unit of the robot system according to the third embodiment distributes the articles to any of a plurality of robots as transfer targets on the basis of the relative position between each robot and the two-dimensional position of the article on the conveyance path when the article is conveyed to a position from which the article is transferred by each robot.

Thereby, according to the robot system of the third embodiment, even when the distance from the conveyance path to each robot is different from each other, it is possible to prevent the workload of each robot from becoming uneven.

Here, a case in which the robots are arranged on the same side of the conveyance path is described. However, a plurality of robots may be arranged on both sides of the conveyance path. In this case, the distribution unit calculates the score of one article for each robot by using a different formula of evaluation function according to a positional relationship between each robot and the conveyance path.

Then, the distribution unit distributes the articles, which are transfer targets, to each robot so that the total score of the articles distributed to one robot as transfer targets is even for each robot. Thereby, even when a plurality of robots is arranged on both sides of the conveyance path, it is possible to prevent the workload of each robot from becoming uneven.

Fourth Embodiment

Next, a robot system 1c according to a fourth embodiment will be described with reference to FIG. 8. FIG. 8 is a block diagram illustrating a configuration of the robot system 1c according to the fourth embodiment. Here, among components of the robot system 1c, the same components as those of the robot system 1 illustrated in FIG. 2 are denoted by the same reference numerals as those in FIG. 2 and the description thereof will be omitted.

The robot system 1c illustrated in FIG. 8 includes n robot controllers (a first robot controller 5-1 to an nth robot controller 5-n), each of which is connected to each of the first robot 3-1 to the nth robot 3-n, respectively.

The first robot controller 5-1 to the nth robot controller 5-n function as instruction units that issue various operation instructions to the first robot 3-1 to the nth robot 3-n, respectively.

Further, the robot system 1c includes an integrated controller 50 connected to the first robot controller 5-1 to the nth robot controller 5-n and the two-dimensional position information acquisition unit 4. The integrated controller 50 has the same function as that of the distribution unit 51 illustrated in FIG. 2 in the robot system 1c.

In other words, the integrated controller 50 includes a distribution unit 51c and the storage unit 52. In the same manner as the distribution unit 51 illustrated in FIG. 2, the distribution unit 51c of the integrated controller 50 calculates the score of each article W in the image capturing area 20 based on the image information inputted from the two-dimensional position information acquisition unit 4 and the evaluation function information 53 stored in the storage unit 52.

Then, the distribution unit 51c determines robots to be distribution destinations so that the total score of the articles W distributed to one robot as transfer targets is even for each robot, and provides article positions on the conveyance path 2 of the articles W, which are transfer targets, to the determined distribution destination robots. Thereby, in the robot system 1c, it is possible to prevent the workload of each robot from becoming uneven.

Further, in the robot system 1c, it is possible to decentralize the function of the robot controller 5 illustrated in FIG. 2 to the first robot controller 5-1 to the nth robot controller 5-n and the integrated controller 50.

Therefore, according to the robot system 1c, it is possible to use an inexpensive controller having a processing capacity lower than that of the robot controller 5 illustrated in FIG. 2 as the first robot controller 5-1 to the nth robot controller 5-n and the integrated controller 50.

Further, according to the robot system 1c, it is possible to add a robot by only adding the robot and a robot controller that issues operation instructions to the robot without largely changing the control content of the integrated controller 50. Therefore, according to the robot system 1c, it is possible to easily add robots and further improve transfer efficiency of the articles W.

As described above, according to the fourth embodiment, robots can be easily added, so that it is possible to achieve a robot system that can reduce articles that are not transferred by any of robots at lower cost.

In the same manner, also in the robot systems 1a and 1b illustrated in FIGs. 6 and 7, a robot controller may be provided to each robot and the integrated controller 50 may be provided as a higher-level device of the robot controllers.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

Reference Signs List

1, 1a, 1b, 1c    Robot system

| 2 | Conveyance path |
| 2B | Servo motor |
| 2C | Encoder |
| 2-1 | First takeout area |
| 2-1 | Second takeout area |
| 20 | Image capturing area |
| 3-1 | First robot |
| 3-1A | Robot arm |
| 3-1B | End effector |
| 3-2 | Second robot |
| 3-n | nth robot |
| 30 | Place |
| 4 | Two-dimensional position information acquisition unit |
| 41 | Transfer result acquisition unit |
| 5, 5a, 5b | Robot controller |
| 51, 51a, 51c | Distribution unit |
| 52, 52a | Storage unit |
| 53 | Evaluation function information |
| 53a | Transfer result history information |
| 54 | Coefficient correction unit |
| 50 | Integrated controller |
| 5-1 | First robot controller |
| 5-n | nth robot controller |
| W, W1 to W6 | Article |

**Claims**

1. A robot system comprising:

an information acquisition unit that acquires information indicating a two-dimensional position on a surface of a conveyance path of an article conveyed on the conveyance path;
a plurality of robots that transfer the article from the conveyance path; and
a distribution unit that distributes the articles on the surface of the conveyance path to the plurality of robots as transfer targets on the basis of the information acquired by the information acquisition unit.

2. The robot system according to claim 1, wherein
the distribution unit distributes the articles on the surface of the conveyance path to the plurality of robots as transfer targets on the basis of a relative position between the robot and the conveyance path.

3. The robot system according to claim 1 or 2, wherein
the distribution unit grades the article for each article based on the information acquired by the information acquisition unit and a predetermined evaluation function and distributes the articles based on a result of the grading.

4. An article transfer method comprising:

acquiring information indicating a two-dimensional position on a surface of a conveyance path of an article conveyed on the conveyance path by an information acquisition unit;
transferring the article from the conveyance path by a plurality of robots; and
distributing the articles on the surface of the conveyance path to the plurality of robots by a distribution unit as transfer targets on the basis of the information acquired by the information acquisition unit.

# FIG.1

# FIG.2

# FIG.3

# FIG.4

| ARTICLE | SCORE |
|---------|-------|
| W1 | 1 |
| W2 | 2 |
| W3 | 3 |
| W4 | 3 |
| W5 | 5 |
| W6 | 6 |

3-1 FIRST ROBOT

3-2 SECOND ROBOT

# FIG.5

```
                    ┌─────────┐
                    │  START  │
                    └────┬────┘
                         ▼
┌──────────────────────────────────────────────┐
│ DETECT TWO-DIMENSIONAL POSITION OF            │ ─── S101
│ ARTICLE IN IMAGE CAPTURING AREA               │
└──────────────────────┬───────────────────────┘
                       ▼
┌──────────────────────────────────────────────┐
│ CALCULATE SCORE OF EACH ARTICLE               │ ─── S102
└──────────────────────┬───────────────────────┘
                       ▼
┌──────────────────────────────────────────────┐
│ DETERMINE DISTRIBUTION DESTINATIONS SO        │
│ THAT TOTAL SCORE OF DISTRIBUTED ARTICLES      │ ─── S103
│ TO EVEN FOR EACH DISTRIBUTION DESTINATION     │
└──────────────────────┬───────────────────────┘
                       ▼
┌──────────────────────────────────────────────┐
│ PROVIDE ARTICLE POSITIONS OF ARTICLES AS      │
│ TRANSFER TARGET TO DETERMINED                 │ ─── S104
│ DISTRIBUTION DESTINATIONS                     │
└──────────────────────┬───────────────────────┘
                       ▼
                  ┌─────────┐
                  │   END   │
                  └─────────┘
```

# FIG.6

# FIG.7

# FIG.8

**EP 2 876 066 A1**

# INTERNATIONAL SEARCH REPORT

| International application No. |
|---|
| PCT/JP2012/068457 |

**A. CLASSIFICATION OF SUBJECT MATTER**
*B65G47/90*(2006.01)i, *B07C5/34*(2006.01)i, *B25J13/00*(2006.01)i

According to International Patent Classification (IPC) or to both national classification and IPC

**B. FIELDS SEARCHED**

Minimum documentation searched (classification system followed by classification symbols)
B65G47/90, B07C5/34, B25J13/00

Documentation searched other than minimum documentation to the extent that such documents are included in the fields searched
Jitsuyo Shinan Koho        1922–1996   Jitsuyo Shinan Toroku Koho   1996–2012
Kokai Jitsuyo Shinan Koho   1971–2012   Toroku Jitsuyo Shinan Koho   1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2007-30087 A (Fanuc Ltd.), 08 February 2007 (08.02.2007), paragraphs [0013] to [0028]; fig. 1 to 7 & EP 1748339 A2 | 1-4 |

☐ Further documents are listed in the continuation of Box C.          ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 22 October, 2012 (22.10.12) | 30 October, 2012 (30.10.12) |

| Name and mailing address of the ISA/ Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3834088 B